# EUROPEAN PATENT APPLICATION

(11) **EP 4 485 405 A1**
(43) Date of publication of application: **01.01.2025**
(21) Application number: 23382653.6
(22) Date of filing: 27.06.2023
(51) Int. Cl.: G07C 9/00, B60R 25/24

(54) **LOCALIZATION MODULES, VEHICLE ACCESS SYSTEMS, COMMUNICATION SYSTEMS, VEHICLES AND METHODS**

(71) Applicant: Idneo Technologies, S.A.U., 08100 Mollet del Vallès, Barcelona (ES)
(72) Inventor: Rodríguez Martínez, Rubén, Mollet del Vallès, Barcelona (ES); Albesa Querol, Joan, Mollet del Vallès, Barcelona (ES)
(74) Representative: Bardehle Pagenberg S.L.

(57) **Abstract**

The present disclosure relates to localization modules, vehicle access systems, communication systems, motor vehicles and methods. A localization module is configured to receive data from internal vehicle transceivers based on first or second communication modes with a portable device, to determine parameters indicative of a position of the portable device based on the received data, and to correct one or more parameters based on the first communication mode which are less precise than a parameter based on the second communication mode. Also disclosed are methods and systems based on the combination of BLE and UWB technologies.

## Description

### TECHNICAL FIELD

The present disclosure relates to localization modules, vehicle access systems, communication systems, and methods, in particular for determining a position of a portable device with respect to the vehicle. The present disclosure further relates to motor vehicles.

### BACKGROUND

Key systems for unlocking and locking a motor vehicle such as a car have evolved in the last decades from being metallic keys which are inserted and rotated in a lock of the door of the driver to remote key systems. Remote key systems aim to perform the functions of a standard motor vehicle key, but without physical contact between the "key" and the vehicle. For example, a remote keyless system (RKS) or remote keyless entry (RKE) can control access to the motor vehicle by pressing a button on a remote when being in proximity of the vehicle. And passive keyless entry (PKE) or passive entry passive start (PEPS) systems can operate automatically when the user is in proximity of the vehicle. For example, the motor vehicle can be unlocked when a user approaches or when the handle of the driver's door is pulled. And the vehicle can be locked when the user walks away or for example touches the driver's door when leaving the vehicle.

A PKE/PEPS system can also be configured to perform other actions related to the vehicle, for example extending/folding the side mirrors of the vehicle, starting the vehicle (i.e. turning on the engine of the vehicle), switching on the vehicle lights and others.

A PKE/PEPS system may use low-frequency (LF), e.g. 130 kHz, signals and ultra-high-frequency (UHF), e.g. 868 MHz, signals to exchange unique key access codes between the key and the vehicle. For example, a unique access code can be stored in the key. Once an electronic module of the vehicle such as an electronic control unit determines that an identification key is valid, and once the key is in the vicinity of the vehicle, the vehicle allows access to the user, e.g. the driver. The key can be a portable device such as a remote or a mobile phone. If the key/portable device is a mobile phone, then Bluetooth low energy (BLE) may be used as the communication mode between the electronic control unit of the vehicle and the key/portable device.

The PKE/PEPS system may also measure the distance between the vehicle and the key/portable device, determining for instance whether the key is inside or outside the vehicle. In some examples, if the key is outside the vehicle, the user may enter the vehicle, but the engine may not be turned on until the user is inside the vehicle.

BLE technology allows authentication of a user's smartphone as well as to determine a position and distance between the user and the motor vehicle, e.g. between the user and a main or master BLE transceiver, in particular based on "received signal strength indication" (RSSI). Knowing if a signal is getting stronger or weaker indicates for example whether the key is moving towards or away from the vehicle. A vehicle may comprise further BLE transceivers, i.e. anchor or slave BLE transceivers, which can help to determine such distance by for example triangulation or trilateration.

However, calculations based on RSSI and BLE technology are rather sensitive to the environment around the vehicle and the smartphone. Weather conditions such as rain or snow, objects such as walls or other vehicles, and others may deteriorate the precision of the determined distance. In this regard, it should be noted that PKE/PEPS systems that work with technologies or protocols which use RSSI also suffer from these same disadvantages of a potential lack of accuracy. As should be apparent, the correct determination of the position of a user or a distance of a user to the vehicle is important for performing actions such as locking or unlocking doors etc.

A known way to have a good precision in a consistent manner when calculating the distance is by utilizing ultra-wide band (UWB) technology. UWB can precisely detect location by for example measuring a time-of-flight (ToF), i.e. a distance or a location can be calculated based on how long it takes for pulses of radio to travel from one device to another.

However, UWB devices are relatively expensive, and it would be beneficial to reduce the use of UWB devices for these purposes on vehicles.

The present disclosure aims at overcoming at least some of the above disadvantages.

### SUMMARY

In an aspect of the disclosure, a method is provided. The method comprises receiving first data from a first internal transceiver arranged in a vehicle, the first data being based on a communication between the first internal transceiver and a first external transceiver of a portable device in a first communication mode. The method further comprises determining, based on the first data, a first parameter indicative of a position of the first external transceiver relative to the first internal transceiver.

The method further comprises receiving second data from a second internal transceiver arranged in the vehicle, the second data being based on a communication between the second internal transceiver and a second external transceiver of the portable device in a second communication mode. The method further comprises determining, based on the second data, a second parameter indicative of a position of the second external transceiver relative to the second internal transceiver.

The second parameter based on communication in the second communication mode is more precise than the first parameter based on communication in the first communication mode. The method further comprises calibrating one or more internal transceivers arranged in the vehicle and configured to operate in the first communication mode based at least on the second parameter.

In this regard, determinations of position or distance based on the first internal transceiver may be corrected or calibrated based on determinations by the second transceiver. Similarly, if there are more internal transceivers arranged in the vehicle which are configured to communicate with the first external transceiver in the first communication mode, the second parameter is also more precise than the parameters indicative of a position of the first external transceiver relative to these internal transceivers determined based on a communication between these internal transceivers and the first external transceiver of the portable device in the first communication mode.

Similarly, a localization module for a vehicle access system is provided. The localization module may be configured to carry out such a method. According to an aspect of the present disclosure, the localization module is configured to receive first data from a first internal transceiver configured to be arranged in the vehicle. The first data is based on a communication between the first internal transceiver and a first external transceiver of a portable device in a first communication mode. The localization module is configured to determine, based on the first data, a first parameter indicative of a position of the first external transceiver relative to the first internal transceiver.

The localization module is further configured to receive second data from a second internal transceiver configured to be arranged in the vehicle. The second data is based on a communication between the second internal transceiver and a second external transceiver of the portable device in a second communication mode. The localization module is further configured to determine, based on the second data, a second parameter indicative of a position of the second external transceiver relative to the second internal transceiver.

The second parameter based on communication in the second communication mode is more precise than the first parameter based on communication in the first communication mode. And the localization module is further configured to, based at least on the second parameter, calibrate one or more internal transceivers configured to be arranged in the vehicle and configured to operate in the first communication mode.

According to this aspect, a determined second parameter related to a position of a portable device which is based on a communication mode that is more precise than the first communication mode can be used to correct one or more parameters related to a position of the portable device with respect to one or more internal transceivers. In this manner, the reliability of the transceivers based on the first communication made may be increased. The number of internal transceivers configured to communicate in the second communication mode, which are more precise but also more expensive and complex, can be reduced. A single internal transceiver configured to communicate in the second communication mode may even be sufficient.

Throughout this disclosure, a portable device may be understood as a device which is sufficiently small and light to be carried by a person, e.g. a driver or a passenger of a motor vehicle such as a car, and to act as a key to a corresponding vehicle. The portable device is configured to communicate wirelessly and may comprise a plurality of antennas to this end. The portable device is configured to communicate in a first communication mode, e.g. BLE, and in a second communication mode, e.g. UWB. The portable device may generally comprise one or more memory elements to store instructions and one or more processors to execute the instructions. The portable device may comprise a self-contained power source, like one or more batteries. A portable device may for example be a smartphone, a tablet, a laptop, a remote, or a smart watch.

Throughout this disclosure, a communication mode may be understood as a wireless technology or protocol which can be used to suitably communicate between a transmitter and a receiver. Examples of a communication mode may include Bluetooth low energy (BLE), ultra-wide band (UWB), WiFi and others. Some communication modes may for example use ultra-high frequency (UHF) radio waves, i.e. waves having a frequency between 300 MHz and 3 GHz. In some examples, communicating may include using Lidar (light detection and ranging), both in-cabin and out-cabin, TOF (time of flight) cameras, WiFi positioning systems or V2X (vehicle-to-everything) technology. I.e., although a UWB transceiver can be used to calibrate a BLE transceiver, the present disclosure is not limited to this, and the present disclosure is applicable for calibrating other technologies too.

Throughout this disclosure, a parameter indicative of a position may be understood as data that directly or indirectly allows to determine a position of a first element, e.g. a first transceiver, with respect to a second element, e.g. a second transceiver. The parameter indicative of a position may for example be a distance or an angle or direction.

Throughout the present disclosure "data relating to a communication" may be regarded as any data that relates to a communication between two devices, particularly two transceivers, which can be helpful for the determination of the aforementioned parameter indicative of a position. In particular, in the case of BLE technology, the data may include data that is, relates to, or is indicative of, a strength of a signal received (RSSI). In the case of UWB technology, the data may include data that is, relates to, or is indicative of, a time-of-flight. Other possibilities are however not excluded.

In this regard, a position may for example comprise a distance component and a direction component. For example, a position of a portable device such as a mobile phone with respect to a transceiver within a vehicle may be given by a distance between the mobile phone and the transceiver (e.g. 1.5 m) and a direction, e.g. given by the imaginary straight line joining the smartphone and the transceiver. Depending on the method used, the distance between both elements or the direction between both elements may be sufficient for determining the position of the smartphone with respect to the vehicle. For example, trilateration or multilateration uses several distances, e.g. circle radii, to find the point of intersection, e.g. of the circles. Or for example, triangulation or multiangulation uses several angles that define directions, to find the point of intersection of the directions. The terms position and location are used interchangeably throughout this disclosure.

Therefore, a distance and an angle or direction may be parameters indicative of a position. And for example trilateration or triangulation may be used afterwards to determine a position of the portable device with respect to the vehicle based on the parameters indicative of the position or a direction.

Throughout the present disclosure, calibration may be regarded as adjusting or correcting measurements (e.g. RSSI), parameters (angle, direction, distance or other) or determinations of position/distance.

The first communication mode may be Bluetooth low energy, BLE, and/or the second communication mode may be ultra-wide band, UWB. Other communication modes may be used as long as the operation occurs as described throughout this disclosure.

In some examples, calibrating may comprise determining a corrected first parameter indicative of the position of the first external transceiver relative to the first internal transceiver based on the second parameter. Therefore, the second internal transceiver may be switched off and the calibrated first internal transceiver may be used. Switching the second internal transceiver may reduce energy consumption.

In these or other examples, the localization module may further be configured to receive third data from a third internal transceiver configured to be arranged in the vehicle, wherein the third data is based on a communication between the third internal transceiver and the first external transceiver in the first communication mode, and to determine, based on the third data, a third parameter indicative of a position of the first external transceiver relative to the third internal transceiver. Calibrating may comprise determining a corrected third parameter indicative of the position of the first external transceiver relative to the third internal transceiver based on the first and second parameters.

The first, second and third parameters may be distances in some examples, e.g. corresponding to radii of circles centered on the first, second and third transceivers, respectively, the position of the portable device assumed to be somewhere on the circles.

In a further aspect of the disclosure, a vehicle access system is provided. The vehicle access system comprises the localization module of the previous aspect, and further comprises the first internal transceiver, the second internal transceiver and the third internal transceiver.

The first and second internal transceivers may be arranged adjacent to each other. In some examples, the localization module may be configured to, before determining the corrected first parameter and/or the corrected third parameter, determine that the first and second parameters differ in more than a predetermined difference threshold. For example, they may differ in more than an accepted tolerance. The second parameter may then be used to correct the first parameter. The corrected first parameter may take the value of the second parameter. For example, the localization module may be configured to determine the corrected first parameter by making the first corrected parameter equal to the second parameter.

Throughout this disclosure, adjacent transceivers may be understood as transceivers that are sufficiently close such that, if each transceiver determines, e.g. detects, measures or calculates, data indicative of a position of another transceiver with respect to each of the adjacent transceivers, the data should be the same, within tolerances, by virtue of their location. "Adjacent" as used throughout the present disclosure is not to be interpreted as requiring two elements to be physically touching or sharing a border between them. In other words, the adjacent transceivers do not occupy the same space, but they are sufficiently close to consider that they are determining data indicative of a position as if they were occupying the same space. Adjacent transceivers may be arranged within a same device or component, or may be arranged in different devices or components.

In some examples, the localization module may be configured to determine the third corrected parameter in different ways, e.g. by using a look-up table or by using a difference or quotient between the first and second parameters as an error factor, e.g. as an error percentage.

In some examples, the localization module may comprise the first internal transceiver and the second internal transceiver. In other words, the first and second internal transceivers may form part of the localization module. In some examples, the vehicle access systems may comprise an electronic control unit (ECU), and the ECU may comprise the localization module.

The vehicle access system, and particularly the ECU of the vehicle access system, may be configured to detect, based at least on the corrected first parameter and/or the corrected third parameter, that the portable device is positioned at a distance from the vehicle which is below a predetermined action threshold. The ECU may, in response to the detection, be configured to cause, e.g. trigger, an action related to the vehicle. The localization module may in some examples perform the detection and cause the action. In other examples, other modules or processors may perform the detection and trigger the action.

The action related to the vehicle may be locking or unlocking at least one vehicle door, turning on or off a vehicle engine, extending or folding at least one side mirror of the vehicle, switching on or off one or more vehicle lights, honking (a vehicle horn) or regulating a temperature or a humidity level inside the vehicle. More than one action related to the vehicle may be performed. Other suitable action(s) may also be possible.

In some examples, the second internal transceiver may further be configured to not communicate in the second communication mode until the portable device has been authenticated. This may help to save energy.

According to a further aspect of the disclosure, a vehicle comprising the vehicle access system of the previous aspect arranged in the vehicle is provided.

According to a further aspect of the disclosure, a communication system is provided. The communication system comprises the vehicle access system as described herein and a portable device comprising the first external transceiver and the second external transceiver.

The localization module may comprise suitable elements, e.g. processor element(s) and memory element(s) for performing this method.

In some examples, e.g. if the localization module is arranged in the electric control unit of the vehicle, the method may further comprise detecting based at least on the corrected first parameter, that the portable device is positioned at a distance from the vehicle which is below a predetermined action threshold. The method may further comprise, in response to the detection, causing an action related to the vehicle (e.g. as indicated before).

In a further aspect of the disclosure, a method is provided. The method comprises a first internal transceiver arranged in vehicle communicating with first external transceiver in a first communication mode and sending first data relating to the communication to a localization module.

The method further comprises a second internal transceiver arranged in the vehicle communicating with second external transceiver in a second communication mode and sending second data relating to the communication to a localization module. The method further comprises a third internal transceiver arranged in the vehicle communicating with the first external transceiver in the first communication mode and sending third data relating to the communication to a localization module.

The method further comprises a localization module receiving the first, second and third data, and based on the first, second and third data respectively determining first, second and third parameters. The first, second and third parameters are respectively indicative of a position of the first external transceiver relative to the first internal transceiver based, of a position of the second external transceiver relative to the second internal transceiver, and of a position of the first external transceiver relative to the third internal transceiver.

The method further comprises the localization module determining a corrected first parameter and/or a corrected third parameter based on the second parameter.

Similarly as mentioned previously, the method may further comprise detecting, by the controller or the localization module and based at least on the corrected first parameter, that the portable device is positioned at a distance from the vehicle which is below a predetermined action threshold, and in response to the detection, causing an action related to the vehicle.

In examples, the second internal transceiver may enter an energy saving mode during a period of time after a difference between the first parameter and the second parameter has been determined. This may allow to decrease the energy consumption of the second device.

The second internal transceiver may start to communicate in the second mode with the second external transceiver (only) after the first internal transceiver detects that the first external transceiver and the second external transceiver are within a range of the second internal transceiver based on the first parameter, e.g. when the first parameter is a first distance. This may also help to keep energy consumption low, as if there are a plurality of internal transceivers in the vehicle configured to communicate in the second mode of communication, not all of them need to be active at the same time.

According to a further aspect of the disclosure, a method for activating a transceiver of a vehicle is provided. A vehicle comprises a first internal transceiver and a second internal transceiver arranged in the vehicle. The first internal transceiver is configured to communicate with a first external transceiver in a first communication mode. The second internal transceiver is configured to communicate with a second external transceiver in a second communication mode. The first and second external transceivers are arranged in a portable device. The method comprises the first internal transceiver communicating with the first external transceiver, wherein communicating with the first external transceiver is only possible when the first external transceiver is within a first range of the first internal transceiver. The method further comprises refraining from activating communication of the second internal transceiver until the first internal transceiver has established communication with the first external transceiver.

According to this aspect, a first internal transceiver communicating in a first communication mode such as BLE may allow to detect a portable device within a certain range near a motor vehicle. The range may herein be regarded as a distance at which a transmission or communicated is established or an area within which a transmission or communication is established. The portable device may be closer to that first transceiver than to other first transceivers in some examples. The range may not be very precise, as already explained, but it may be a sufficiently good initial estimation for locating the first external transceiver relative to the first internal transceiver, and optionally authenticating the portable device. A second transceiver may then be activated such that a localization module may determine a precise parameter indicative of a location of the portable device, e.g. a parameter indicative of a position of the second external transceiver relative to the second internal transceiver.

For example, the method may further comprise the second internal transceiver communicating with the second external transceiver and determining a parameter indicative of a position of the second external transceiver relative to the second internal transceiver based on data relating to the communication between the second internal transceiver and the second external transceiver.

As the second internal transceiver may be activated only after detecting the portable device, e.g. after pairing with the portable device, energy may be saved.

In some examples, the first communication mode may be Bluetooth Low Energy, BLE and/or the second communication mode may be Ultra Wide Band, UWB.

More than one second internal transceiver configured to obtain data related to a position of the portable device within the range associated with the first internal transceiver may be activated. In some examples, one or more second internal transceivers of the plurality of second internal transceivers may not be activated. For example, the localization module or the ECU may not signal them to start communication with the second external transceiver of the portable device.

According to a further aspect of the disclosure, a system suitable for carrying out the above method is provided. The system comprises a first internal transceiver and a second internal transceiver arranged, or configured to be arranged, in a vehicle. The first internal transceiver is configured for communicating with a first external transceiver in a first mode of communication, and the second internal transceiver is configured for communicating with a second external transceiver in a second mode of communication. The second internal transceiver is configured to refrain from communicating with the second external transceiver until the first internal transceiver has established communication with the first external transceiver.

According to a further aspect of the disclosure, a method for performing an action on a vehicle is provided. The vehicle comprises one or more Bluetooth Low Energy, BLE nodes; one or more first Ultra Wide Band, UWB, antennas (e.g. within a first UWB node or communication module) directed towards an inside of the vehicle; and one or more second UWB antennas (e.g. within a second UWB communication module or within the first UWB communication module) directed towards an outside of the vehicle. The method comprises: one or more of the BLE nodes communicating with a BLE node of a portable device to determine authentication of the portable device, and one or more of the first and second UWB antennas determining a position of the portable device to be in the inside or at the outside of vehicle. The method further comprises one or more of the first or second UWB antennas attempting to detect signs of life. The method further comprises performing the action on the vehicle based at least on the authentication of the portable device, on a determination whether the portable device is in the inside or the outside of the vehicle, and on a detection of signs of life in the inside of the vehicle or at the outside of the vehicle.

In some examples, the first and/or second UWB antennas may be configured to send signals and collect the reflections of the sent signals. In this manner a plurality of reflections may be collected. The measured information may comprise signal power. For example, a plurality of curves of power of the received signals as a function of time may be collected. These power curves may then be averaged for removing noise. The averaged power curve may be converted to the frequency domain by performing a fast Fourier transform (FFT), i.e. a curve of power as a function of frequency may be obtained. By looking at the peaks of this curve which exceeds a predetermined power threshold, a respiration and/or a heart rate can be identified. The presence of a person can therefore be identified outside and/or inside the vehicle.

In some examples, an action may be opening a vehicle door, closing a vehicle door, sending an alarm feature and other. An action may also be requesting a security feature of the portable device. A security feature may for example be a PIN or password, or a fingerprint. If for example a controller such as an ECU of the vehicle detects that the portable device is outside (and close to) the motor vehicle, but a user such as a driver is not, (for example, because the user may have lost the portable device near the vehicle but has not realized this) the ECU may instruct the portable device to activate a security feature for providing additional security. For example to verify that when someone tries to open the vehicle again by using the portable device, this is the authenticated person and not anyone else, e.g. a different person who may have found the portable device on the ground.

In a further aspect, systems and vehicles suitable for performing the above method are provided. Such vehicles may comprise one or more BLE nodes configured to communicate with a BLE node on a portable device for authenticating the portable device, one or more first UWB antennas directed towards an inside of the vehicle configured for detecting signs of life at the inside of the vehicle, and one or more second UWB antennas directed towards an outside of the vehicle to detect signs of life at the outside of the vehicle. The vehicle may further comprise a control system that is configured to perform an action on the vehicle based at least on the authentication of the portable device, on a determination whether the portable device is in the inside of the vehicle or at the outside of the vehicle, and on a detection of signs of life in the inside of the vehicle or at the outside of the vehicle.

The various aspects which are described separately in this summary may also be combined with each other.

### BRIEF DESCRIPTION OF THE DRAWINGS

Non-limiting examples of the present disclosure will be described in the following, with reference to the appended figures, in which:
Figure 1A schematically illustrates a vehicle comprising an example of a vehicle access system and a portable device outside the vehicle.
Figure 1B schematically illustrates an example of trilateration for determining the position of a portable device.
Figure 2 schematically illustrates the vehicle of figure 1A comprising another example of a vehicle access system and the portable device outside the vehicle.
Figure 3 shows a flowchart of an example a method.

The figures refer to example implementations and are only to be used as an aid for understanding the claimed subject matter, not for limiting it in any sense.

### DETAILED DESCRIPTION OF EXAMPLES

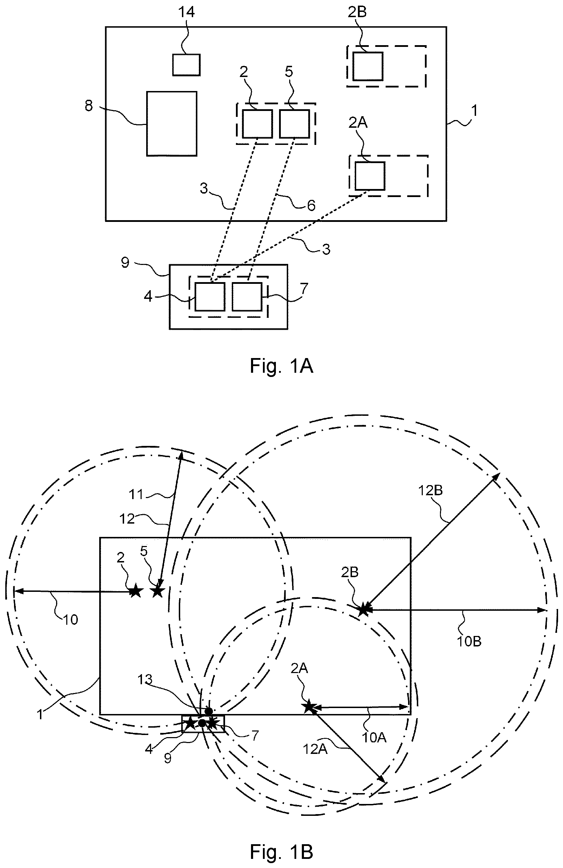

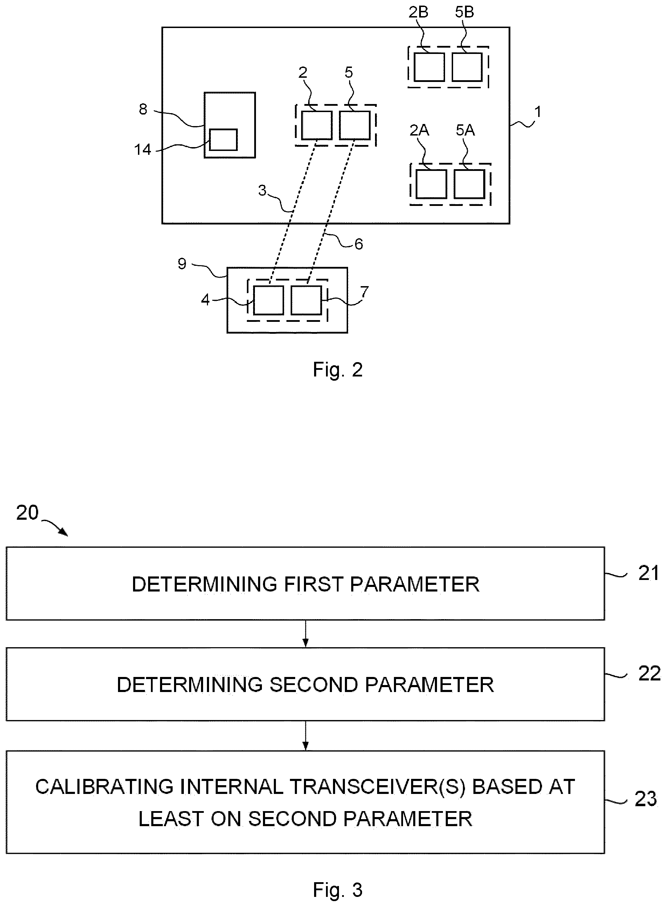

Figure 1A schematically illustrates a vehicle 1 comprising an example of a localization module 14 and a portable device 9 outside the vehicle 1. Figure 1B schematically illustrates an example of trilateration for determining the position of a portable device 9 with respect to the vehicle 1. With reference for illustrative purposes to the examples of figures 1A and 2, in a first aspect of the present disclosure, a localization module for a vehicle access system is provided.

The localization module 14 for a vehicle access system is configured to receive first data from a first internal transceiver 2 configured to be arranged in the vehicle 1. The first data is based on a communication between the first internal transceiver 2 and a first external transceiver 4 of the portable device 9 in a first communication mode 3. The localization module 14 is configured to determine, based on the first data, a first parameter 10 indicative of a position of the first external transceiver 4 relative to the first internal transceiver 2. For example, the first data may be a strength of a power signal from the first external transceiver 4 received and measured by the first internal transceiver 2. And the localization module 14 may use the power of the received signal measured by the first internal transceiver 2 to determine a first distance 10 between the first internal 2 and external 4 transceivers.

The localization module 14 is further configured to receive second data from a second internal transceiver 5 configured to be arranged in the vehicle 1. The second data is based on a communication between the second internal transceiver 5 and a second external transceiver 7 of the portable device 9 in a second communication mode 6. The localization module is further configured to determine, based on the second data, a second parameter 11 indicative of a position of the second external transceiver 7 relative to the second internal transceiver 5. For example, the second data may be a time-of-flight (ToF) of a signal sent by the second internal transceiver 5 and received back after reaching the second external transceiver 7. And the localization module 14 may use the ToF measured by the second internal transceiver 5 to determine a second distance 11 between the second internal 5 and external 7 transceivers which is more precise than the first distance 10.

In some examples, the localization module 14 is further configured to receive third data from a third internal transceiver 2A, 2B configured to be arranged in the vehicle 1. The third data is based on a communication between the third internal transceiver 2A, 2B and the first external transceiver 4 in the first communication mode 3. The localization module is configured to determine, based on the third data, a third parameter 10A, 10B indicative of a position of the first external transceiver 4 relative to the third internal transceiver 2A, 2B.

The first 4 and second 7 external transceivers are arranged, and in particular adjacently arranged, in a portable device 9. The second parameter 11 based on communication in the second communication mode 6 is more precise than the first 10 and third 10A, 10B parameters based on communication in the first communication mode 3.

The localization module 14 is further configured to calibrate one or more internal transceivers 2, 2A, 2B configured to operate in the first communication mode 3 based at least on the second parameter 11. For example, the localization module 14 may be configured to determine a corrected first parameter 12 and/or a corrected third parameter 12A, 12B based at least on the second parameter 11.

The value of the determined first parameter 10 and/or the value of the determined third parameter 10A, 10B may therefore be corrected by using at least the second parameter 11 which is more precise than the first and third parameters. Accordingly, the number of second internal transceivers to be arranged in the vehicle 1 can be reduced.

The first communication mode 3 may be Bluetooth low energy, BLE, and/or the second communication mode 6 may be ultra-wide band, UWB, in some examples. Other suitable communication modes may be used in other examples. As mentioned before, UWB may provide more precise measurements, e.g. of ToF data, than BLE, e.g. of strength of received signal. Accordingly, a parameter indicative of a position determined based on UWB communication may be used for correcting the parameter(s) indicative of a position determined based on BLE communication for one or more BLE transceivers arranged in the vehicle 1.

The localization module 14 may in general include one or more processors configured to perform one or more of the steps described herein. For example, one or more processors may be configured to determine one or more corrected parameters. The localization module may also include a memory, e.g. one or more suitable memory elements or devices. The localization module may further include one or more sensors or antennas. I.e., the controller may be communicatively coupled with for example the first transceiver 2 and the second transceiver 5.

In a further aspect of the disclosure, a vehicle access system is provided. The vehicle access system comprises the localization module 14 as described herein, and further comprising the first internal transceiver 2, the second internal transceiver 5 and the third internal transceiver 2A, 2B.

In this manner, the first internal transceiver 2 may be used to measure first data which is then used to determine a first parameter, e.g. a first distance 10 between the first internal transceiver 2 and the first external transceiver 4, see e.g. figure 1B. But as such measured first data, and therefore the subsequent determined parameter, may not be sufficiently precise, e.g. due to certain weather conditions and/or objects around the portable device 9 and/or the vehicle 1, the determined first parameter may be corrected by using at least a second parameter 11 that is more precise than the first parameter 10. Therefore, the number of second internal transceivers to be arranged in the vehicle 1 can be reduced.

The example of figure 1B schematically illustrates that if the location of a portable device 9 is determined with parameters indicative of a position using for example BLE and trilateration, the precision of the determined parameters, i.e. distances 10, 10A, 10B (radii of the circles shown with dash-dotted lines in figure 1B), may be insufficient for precisely positioning the portable device 9. In such examples, such parameters indicative of a position may be corrected based at last on a second parameter, e.g. second distance 11. In this manner, at least one, and possibly all, of the determined parameters 10, 10A, 10B based on the measurements of each of the corresponding internal transceivers 2, 2A, 2B can be corrected. Figure 1B illustrates that an intersection of the circles shown with dotted lines, related to corrected distances, provide a location of a portable device 9 more precise than an intersection of the circles shown with dash-dotted lines, linked to less imprecise distances. Figure 1B illustrates the corrected data 12, 12A, 12B based at least on the second data 11.

In some examples, such as in the example of figure 1A, a single second internal transceiver may suffice, and the vehicle access system may comprise one second internal transceiver 5 only. In other examples, such as in the example of figure 2, which schematically illustrates the vehicle 1 of figure 1A comprising a plurality of second internal transceivers 5, 5A, 5B and the portable device 9 outside the vehicle, the vehicle access system may comprise a plurality of second transceivers 5, 5A, 5B. In some of these examples, the number of second internal transceivers 5, 5A, 5B may be equal to the number of first internal transceivers 2, 2A, 2B. In other of these examples, the number of second internal transceivers 5, 5A, 5B may be less than the number of first internal transceivers 2, 2A, 2B.

The first internal transceiver 2 and the second internal transceiver 5 may be arranged adjacent to each other, see e.g. fig. 1A. The localization module 14 may further be configured to, before determining the corrected first parameter 12 and/or the corrected third parameter (12A, 12B), determine that the first parameter 10 and the second parameter 11 differ in more than a predetermined difference threshold. As the values of the first 10 and second 11 parameters should be the same by virtue of the first 2 and second 5 internal transceivers being adjacent, correction may only be initiated in some examples if these values 10, 11 differ more than an acceptable difference.

The localization module 14 may further be configured to determine the corrected first parameter 12 by making the first corrected parameter 12 equal to the second parameter 11. As the first transceiver 2 and the second transceiver 5 are adjacent transceivers, the first 10 and second 11 parameters should be the same, within tolerances, because they communicate with transceivers of the same portable device. If the first parameter 10 and the second parameter 11 differ in more than a predetermined difference threshold known or set in advance, and as by design it is known that the second parameter 11 provides the correct or at least more correct value, the corrected first parameter 12 may take the value of the second parameter 11.

For example, if based on BLE, a distance between the first internal transceiver in the vehicle, and the first external transceiver in a PDA or Smartphone is 3 meters, and a distance based on UWB is determined to be 4 meters, then the correct distance may be assumed to be 3 meters.

Regarding the correction of the third parameter 10A, 10B, the parameters 10, 11 indicative of a position determined based on data obtained from transceivers arranged adjacently 2, 5 in the vehicle 1 may be used to correct the parameters 10A, 10B indicative of a position determined based on data obtained from a transceiver 2A, 2B which is not adjacent to them 2, 5. For example, in figures 1A and 1B, the parameters indicative of a position 10, 11 determined based on the adjacent transceivers 2, 5 may be used to correct the parameters indicative of a position 10A, 10B of non-adjacent transceivers 2A, 2B.

In some examples, the localization module 14 may be configured to determine the third corrected parameter 12A, 12B by using a difference (e.g. difference = parameter_1 - parameter_2) or quotient (e.g. quotient = parameter_1/parameter_2) between the first 10 and the second 11 parameters as an error factor, optionally an error percentage.

The error factor can be used as a factor by which the less precise parameter is multiplied. For example, assuming that in figure 1B a first distance 10 determined based on data from a first internal transceiver 2 is of 1.4 m, i.e. D1 = 1.4 m; a second distance 11 determined based on data from a second internal transceiver 5 adjacent to the first internal transceiver 2 is of 1.2 m, i.e. D2 = 1.2 m; and a third distance 10A determined based on data from a third transceiver 2A away from the first internal transceiver 2 and the second internal transceiver 5 is of 0.7 m, i.e. D3 = 0.7 m.

As it is known that D2 provides the most precise distance, a quotient can be calculated as D2/D1 = 0.86. And this can be used as a correction factor, such that the corrected distance 12A based on data from the third internal transceiver 2A would be D3_corrected = D3 . (D2/D1) = 0.6 m.

As previously explained, the corrected first distance 12 may be made equal to the second distance 11, i.e. D1_corrected = D2 = 1.2 m. In this example, a constant quotient or ratio is used. In other examples, the quotient or ratio may be varied for different transceivers, e.g. depending on the position within the vehicle.

In other examples, the localization module 14 may be configured to determine the third corrected parameter 12A, 12B using a look-up table. For example, a look-up table may be built in a design or test phase of the localization module or vehicle access system, and the look-up table may indicate a correction value to be applied to the different parameters to be corrected. The lookup table obtained after the calibration process may for example comprise values of several errors, e.g. differences or quotients between the parameters indicative of a position determined based on data measured by adjacent transceivers 2, 5. The lookup table may also comprise corresponding values of for example error percentages or fixed values representing the correction factor or the corrected value to be used for correcting the other parameters 10A, 10B. In general, any suitable look-up table may be used.

The localization module 14 may comprise the first transceiver 2 and the second transceiver 5 in some examples. For example, a first transceiver 2 and a second transceiver 5 such as the ones of figures 1A and 1B may be master transceivers, e.g. forming a master module, and they may be included in the localization module 14.

The vehicle access system may further comprise an Electronic Control Unit, ECU, 8 for the vehicle 1. The ECU may comprise the localization module 14 in some examples, see e.g. figure 2.

The ECU may comprise the localization module, or may be in communication therewith. The ECU 8 may be configured to detect, based at least on the corrected first parameter 12 and/or the corrected third parameter 12A, 12B, that the portable device 9 is positioned at a distance from the vehicle 1 which is below a predetermined action threshold. In order to reach such a conclusion more the three internal transceivers may be used, as well as additional transceivers. Multiple independent determinations may aid in determining the position of the portable device. In response to the detection, the ECU 8 may be configured to cause 25, e.g. trigger, an action related to the vehicle 1.

The action related to the vehicle 1 may be locking or unlocking at least one vehicle door, turning on or off a vehicle engine, extending or folding at least one side mirror of the vehicle 1, switching on or off one or more vehicle lights, honking, or regulating a temperature or a humidity level inside the vehicle 1.

In some examples, the second internal transceiver 5 may further be configured to not communicate in the second communication mode 6 until the portable device 9 has been authenticated. In this manner, energy can be saved. The ECU 8 may be configured to instruct the second transceiver 5 to initiate a communication in the second mode in some of these examples.

Authentication may include pairing in some examples. Pairing may be understood as a process that helps set up a link between devices to allow communication with a high level of security between them. Pairing may allow for encrypted communication. Pairing can be used to authorize a device, e.g. the portable device 9, i.e. to check that the portable device 9 is really the key linked to the motor vehicle 1, not another key which should not be allowed to perform one or more actions related to the vehicle 1.

Pairing may be omitted for determining the first parameter, the second parameter and the position of the portable device 9 if BLE devices 2, 2A, 2B are used for the determinations.

In some examples, the second transceiver 5, e.g. an UWB transceiver, may be configured to enter an energy saving mode during a period of time, e.g. 5 minutes, after a difference between the first parameter 10 and the second parameter 11 has been determined based on data measured by the first and second adjacent internal transceivers 2, 5. The localization module 14 or the ECU 8 may be configured to instruct the second internal transceiver 5 to do so in some of these examples. The period of time may be predetermined, e.g. it may be a fixed period of time which is set during e.g. a design of test phase. In other examples, the period of time may be variable and the localization module 14 or the ECU 8 may be in charge of signaling the second internal transceiver 5 when to initiate communication.

As mentioned before, in some examples the vehicle access system may comprise a single second internal transceiver 5, e.g. a single UWB transceiver, as schematically illustrated in figures 1A and 1B. In other examples, the vehicle access system may comprise more than one second internal transceiver, 5, 5A, 5B, e.g. a plurality of UWB transceivers, as schematically illustrated in figure 2. In such examples, a pair of a less precise internal transceiver 2, 2A, 2B and a more precise internal transceiver 5, 5A, 5B may take the role of a master device. This may be predetermined in some examples, where in other examples this may depend on an initial area or region in which the portable device 9 is located.

For example, a more precise internal transceiver 5, 5A, 5B may be configured to start to communicate in the second mode 6 with the second external transceiver 7 after a less precise internal transceiver 2, 2A, 2B detects that the first external transceiver 4 and the second external transceiver 7 are within a range of the more precise internal transceiver 5, 5A, 5B based on the first parameter 10.

In this regard, several less precise transceivers 2, 2A, 2B, e.g. BLE transceivers, may have a certain range, i.e. a limited area within which the first external transceiver 4 can be located. These ranges within they can perform detection may be different from the ranges of other less precise transceivers 2, 2A, 2B, such that if the first external transceiver 4 is detected within one of this ranges, the range is linked to a less precise transceiver 2, 2A, 2B only.

Once the first external transceiver 4 has been detected within a range linked to a less precise transceiver 2, 2A, 2B and e.g. authenticated, the corresponding more precise transceiver 5, 5A, 5B adjacent to the less precise transceiver 2, 2A, 2B may start communication in the second communication mode 6. The localization module 14 or the ECU may indicate the more precise transceiver 5, 5A, 5B to initiate the communication. In general, the portable device 9 will be located within a range of the less precise transceiver 2, 2A, 2B closest to the portable device 9. As mentioned above, energy may be saved by operating in this manner.

In a further aspect of the disclosure, a vehicle 1 comprising a vehicle access system as described herein is provided.

In a further aspect of the disclosure, a communication system is provided. The communication system comprises the vehicle access system as described herein and a portable device 9 comprising the first external transceiver and the second external transceiver.

In a further aspect of the disclosure, a communication system is provided. The communication system comprises a vehicle access system according to any of the examples described herein, and a portable device 9 comprising the first transceiver external to the vehicle 4 and the second transceiver external to the vehicle 7.

In a further aspect of the disclosure, a method 20 is provided. Method 20 is schematically shown in the flow chart of figure 3. Features and explanations with respect to method 20 may be applied to and combined with the above aspects and *vice versa.*

Method 20 comprises receiving first data from a first internal transceiver 2 arranged in a vehicle 1. The first data is based on a communication between the first internal transceiver 2 and a first external transceiver 4 in a first communication mode 3. The method further comprises determining 21, based on the first data, a first parameter 10 indicative of a position of the first external transceiver 4 relative to the first internal transceiver 2.

The first internal transceiver 2 may for example measure data such as a strength of a power signal received from the first external transceiver 4. The measured data may then be sent to the localization module 14.

Method 20 further comprises receiving second data from a second internal transceiver 5 arranged in the vehicle 1. The second data is based on a communication between the second internal transceiver 5 and a second external transceiver 7 in a second communication mode 6. The method further comprises determining 22, based on the second data, a second parameter 11 indicative of a position of the second external transceiver 7 relative to the second internal transceiver 5.

The second internal transceiver 5 may for example measure information such as a time-of-flight (ToF) of a signal sent by the second internal transceiver and received back after reaching the second external transceiver 7. The measured data may then be sent to the localization module 14.

The method may in some examples further comprise receiving third data from a third internal transceiver 2A, 2B arranged in the vehicle 1. The third data is based on a communication between the third internal transceiver 2A, 2B and the first external transceiver 4 in the first communication mode 3. The method may further comprise determining, based on the third data, a third parameter 10A, 10B indicative of a position of the first external transceiver 4 relative to the third internal transceiver 5A, 5B.

The second parameter 11 based on communication in the second communication mode 6 is more precise than the first 10 (and third 10A, 10B) parameter(s) based on communication in the first communication mode 3. The method further comprises calibrating 23 one or more internal transceivers 2, 2A, 2B arranged in the vehicle and configured to operate in the first communication mode 3 based at least on the second parameter 11. In some examples, calibrating may comprise determining a corrected first parameter 12 and/or a corrected third parameter 12A, 12B based at least on the second parameter 11.

The method 20 may further comprise detecting, by an ECU 8 of the vehicle 1 and based at least on the corrected first data 12 and/or the corrected third data 12A, 12B, that the portable device 9 is positioned at a distance from the vehicle 1 which is below a predetermined action threshold.

Method 20 may further comprise, in response to the detection and by the ECU 8, causing an action related to the vehicle 1.

The first, second and third parameters may be distances, see the example of figure 1B. In other examples, the first, second and third parameters may be directions or angles. These may also be combined, e.g. a first and third parameter may be a distance, whereas the second parameter may be a direction or angle.

In some examples, the second internal transceiver 5 may enter an energy saving mode during a period of time after a difference between the first parameter 10 and the second parameter 11 has been determined based on data measured by the first internal transceiver 2 and the second internal transceiver 5.

In some examples, the second internal transceiver 5 may start to communicate in the second communication mode 6 with the second external transceiver 7 after the second internal transceiver 5 detects that the first external transceiver 4 and the second external transceiver 7 are within a range of the second internal transceiver 5 based on the first parameter 10.

In some examples, the second internal transceiver 5 may start to communicate in the second communication mode 6 with the second external transceiver 7 after it detects that a portable device 9 has been authenticated.

As indicated above, the features and explanations of method 20 can be applied to and combined with the features and explanations of the localization module, the vehicle access system, the communication system and the vehicle described herein. For example, method 20 can be performed with the communication system, when the vehicle access system is arranged in the vehicle and the portable device 9 is close to the vehicle 1.

According to a further aspect of the disclosure, a method for performing an action on a vehicle is provided. The vehicle comprises one or more Bluetooth Low Energy, BLE nodes. For example, with reference to figures 1 and 2, the BLE nodes may be nodes 2, 2A and 2B.

The vehicle may further one or more first Ultra Wide Band, UWB, antennas (e.g. within a first UWB node or communication module) directed towards an inside of the vehicle; and one or more second UWB antennas (e.g. within a second UWB communication module or within the first UWB communication module) directed towards an outside of the vehicle. For example, some antennas of 5, 5A, 5B (and further non-illustrated antennas present in the vehicles) may be directed towards an inside, and others toward an outside.

The method comprises: one or more of the BLE nodes 2, 2A, 2B communicating with a BLE node of a portable device 9 to determine authentication of the portable device. Authentication may take place through known and/or hereinbefore commented authentication protocols.

The method further comprises: one or more of the first and second UWB antennas determining a position of the portable device to be in the inside or at the outside of vehicle. In the illustrated examples of figures 1 and 2, the portable device 9 is shown to be arranged outside of the vehicle. However, when a user or driver has entered the vehicle, and has taken the portable device with him/her, the portable device may also be detected to be inside in the vehicle.

The method further comprises one or more of the first or second UWB antennas attempting to detect signs of life: the first and/or second UWB antennas may be configured to send signals and collect the reflections of the sent signals. In this manner a plurality of reflections may be collected. The measured information may comprise signal power. For example, a plurality of curves of power of the received signals as a function of time may be collected. These power curves may then be averaged for removing noise. The averaged power curve may be converted to the frequency domain by performing a fast Fourier transform (FFT), i.e. a curve of power as a function of frequency may be obtained. By looking at the peaks of this curve which exceeds a predetermined power threshold, a respiration and/or a heart rate can be identified. The presence of a person can therefore be identified outside and/or inside the vehicle.

The method further comprises performing the action on the vehicle based at least on the authentication of the portable device, on a determination whether the portable device is in the inside or the outside of the vehicle, and on a detection of signs of life in the inside of the vehicle or at the outside of the vehicle.

For example, in one situation, a portable device is detected at the outside of the vehicle, whereas signs of life are detected at the inside of the vehicle. This may indicate that the driver has left the vehicle and has taken his/her portable device with him/her, but that a child has been left alone in the vehicle. If such a detection has been made, an ECU of a vehicle may sound an alarm, or send a signal to the portable device, or take another action in relation with the vehicle, e.g. lower one or more windows.

In another situation, the portable device 9 may be detected at the outside of the vehicle, but no signs of life are detected anywhere. If this occurs, it may be indicative of the driver/user dropping his/her potable device, after leaving the vehicle. It would be undesirable in such a scenario that the car starts, or the doors open or something similar. In this scenario, based on such a detection, the ECU may determine to lock the doors, to request a PIN or other security feature to somebody trying to access the vehicle etc.

In a further aspect, systems and vehicles suitable for performing the above method are provided. Such vehicles may comprise one or more BLE nodes configured to communicate with a BLE node on a portable device for authenticating the portable device, one or more first UWB antennas directed towards an inside of the vehicle configured for detecting signs of life at the inside of the vehicle, and one or more second UWB antennas directed towards an outside of the vehicle to detect signs of life at the outside of the vehicle. The vehicle may further comprise a control system that is configured to perform an action on the vehicle based at least on the authentication of the portable device, on a determination whether the portable device is in the inside of the vehicle or at the outside of the vehicle, and on a detection of signs of life in the inside of the vehicle or at the outside of the vehicle.

Methods and systems according to these last examples regarding the detection of signs of life may be combined with examples of determining a distance/location of a portable device and/or with examples of activating a UWB device only after detection by a BLE device.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow.

## Claims

1. A localization module (14) for a vehicle access system, which is configured to receive first data from a first internal transceiver (2) configured to be arranged in the vehicle (1), wherein the first data is based on a communication between the first internal transceiver (2) and a first external transceiver (4) of a portable device (9) in a first communication mode (3), and wherein the localization module (14) is configured to determine, based on the first data, a first parameter (10) indicative of a position of the first external transceiver (4) relative to the first internal transceiver (2), wherein
the localization module (14) is further configured to receive second data from a second internal transceiver (5) configured to be arranged in the vehicle (1), wherein the second data is based on a communication between the second internal transceiver (5) and a second external transceiver (7) of the portable device (9) in a second communication mode (6), and is further configured to determine, based on the second data, a second parameter (11) indicative of a position of the second external transceiver (7) relative to the second internal transceiver (5), wherein
the second parameter (11) based on communication in the second communication mode (6) is more precise than the first (10) parameter based on communication in the first communication mode (3), and wherein
the localization module (14) is further configured to, based at least on the second parameter (11), calibrate one or more internal transceivers (2, 2A, 2B) configured to be arranged in the vehicle and configured to operate in the first communication mode (3).

2. The localization module of claim 1, wherein the first communication mode (3) is Bluetooth low energy, BLE, and/or wherein the second communication mode (6) is ultra-wide band, UWB.

3. The localization module of claim 1 or claim 2, wherein calibrating comprises determining a corrected first parameter (12) indicative of the position of the first external transceiver (4) relative to the first internal transceiver (2) based on the second parameter.

4. The localization module of any of claims 1-3, wherein the localization module is further configured to:
receive third data from a third internal transceiver (2A, 2B) configured to be arranged in the vehicle (1), wherein the third data is based on a communication between the third internal transceiver (2A, 2B) and the first external transceiver (4) in the first communication mode (3), and to determine, based on the third data, a third parameter (10A, 10B) indicative of a position of the first external transceiver (4) relative to the third internal transceiver (2A, 2B), and
calibrating comprises determining a corrected third parameter (12A, 12B) indicative of the position of the first external transceiver (4) relative to the third internal transceiver (2A, 2B) based on the first (10) and second (11) parameters.

5. A vehicle access system comprising the localization module according to claim 4 and further comprising the first internal transceiver (2), the second internal transceiver (5) and the third internal transceiver (2A, 2B).

6. The vehicle access system according to claim 5, wherein the first (2) and second (5) internal transceivers are arranged adjacent to each other, and optionally wherein the localization module (14) comprises the first internal transceiver (2) and the second internal transceiver (5).

7. The vehicle access system according to claim 6, wherein the localization module (14) is further configured to, before determining the corrected first parameter (12) and/or the corrected third parameter (12A, 12B), determine that the first parameter (10) and the second parameter (11) differ in more than a predetermined difference threshold.

8. The vehicle access system of claim 6 or claim 7, wherein the localization module (14) is further configured to determine the corrected first parameter (12) by making the corrected first parameter (12) equal to the second parameter (11).

9. The vehicle access system of any of claims 6-8, wherein the localization module (14) is configured to determine the third corrected parameter (12A, 12B) using a look-up table.

10. The vehicle access system of any of claims 6-9, wherein the localization module (14) is configured to determine the third corrected parameter (12A, 12B) by using a difference or quotient between the first (10) and the second (11) parameters as an error factor, optionally an error percentage.

11. The vehicle access system according to any of claims 6 - 10, further comprising an Electronic Control Unit, ECU, (8) for the vehicle (1), and optionally wherein the ECU comprises the localization module (14).

12. The vehicle access system according to claim 11, further configured to detect, based at least on the corrected first parameter (12) and/or the corrected third parameter (12A, 12B), that the portable device (9) is positioned at a distance from the vehicle (1) which is below a predetermined action threshold, and in response to the detection cause (25) an action related to the vehicle (1),
and optionally wherein the action related to the vehicle (1) is locking or unlocking at least one vehicle door, turning on or off a vehicle engine, extending or folding at least one side mirror of the vehicle (1), switching on or off one or more vehicle lights, honking, or regulating a temperature or a humidity level inside the vehicle (1).

13. The vehicle access system according to any of claims 5 - 12, wherein the second internal transceiver (5) is further configured to not communicate in the second communication mode (6) until the portable device (9) has been authenticated.

14. A vehicle (1) comprising the vehicle access system according to any of claims 5 - 13 arranged in the vehicle (1).

15. A method (20) comprising:
receiving first data from a first internal transceiver (2) arranged in a vehicle (1), wherein the first data is based on a communication between the first internal transceiver (2) and a first external transceiver (4) of a portable device (9) in a first communication mode (3), and determining (21), based on the first data, a first parameter (10) indicative of a position of the first external transceiver (4) relative to the first internal transceiver (2);
receiving second data from a second internal transceiver (5) arranged in the vehicle (1), wherein the second data is based on a communication between the second internal transceiver (5) and a second external transceiver (7) of the portable device (9) in a second communication mode (6), and determining (22), based on the second data, a second parameter (11) indicative of a position of the second external transceiver (7) relative to the second internal transceiver (5);
wherein the second parameter (11) based on communication in the second communication mode (6) is more precise than the first (10) parameter based on communication in the first communication mode (3), and the method further comprising:
calibrating (23) one or more internal transceivers (2, 2A, 2B) arranged in the vehicle and configured to operate in the first communication mode (3) based at least on the second (11) parameter.
